# EUROPEAN PATENT SPECIFICATION

(11) **EP 3 100 942 B1**
(45) Date of publication and mention of the grant of the patent: **10.07.2019**
(21) Application number: 16171322.7
(22) Date of filing: 25.05.2016
(51) Int. Cl.: B62K 23/06, B62L 3/02

(54) **ACTUATION DEVICE FOR A CONTROL CABLE FOR A BICYCLE GEARSHIFT**
BETÄTIGUNGSVORRICHTUNG FÜR EINEN SEILZUG FÜR EINE FAHRRADGANGSCHALTUNG
DISPOSITIF D'ACTIONNEMENT POUR CÂBLE DE CONTRÔLE D'UN CHANGEMENT DE VITESSES DE BICYCLETTE

(30) Priority: 04.06.2015 IT UB20151309
(43) Date of publication of application: 07.12.2016
(73) Proprietor: CAMPAGNOLO S.R.L., 36100 Vicenza (IT)
(72) Inventor: MINTO, Marco, I-30035 Mirano (VE) (IT); MARANGON, Christian, I-36016 Thiene (VI) (IT)
(74) Representative: Porta & Consulenti Associati S.p.A

(56) References cited:
- FR-A1- 2 657 062
- GB-A- 2 061 468
- JP-A- H0 532 190
- JP-A- S59 127 127
- JP-A- S63 269 795
- US-A- 3 972 247
- US-A- 5 197 927
- US-A- 5 787 757
- US-A- 5 921 140

## Description

The present invention relates to an actuation device for a control cable for a bicycle gearshift, suitable for being mounted on bicycle handlebars. Preferably, the bicycle is a racing bicycle.

A bicycle is normally provided with a rear derailleur associated with the sprocket assembly, which consists of a series of coaxial toothed wheels (sprockets), having different diameters and numbers of teeth, integral with the hub of the rear wheel.

A bicycle is typically also provided with a front derailleur associated with the crankset, which consists of a series of toothed wheels (toothed crowns) having different diameters and numbers of teeth, associated with a pin of the bottom bracket assembly set in rotation by a pair of pedals.

In both cases, the derailleur engages a transmission chain extending in a closed loop between the sprocket assembly and the crankset, moving it on toothed wheels having different diameter and number of teeth, so as to obtain different transmission ratios.

In particular, downward or downhill gearshifting is said when the chain passes from a toothed wheel of larger diameter to a toothed wheel of smaller diameter, and upward or uphill gearshifting is said when the chain moves from a toothed wheel of smaller diameter to a toothed wheel of larger diameter. Concerning this it should be noted that with reference to the front derailleur, downward gearshifting corresponds to the passage to a lower transmission ratio and upward gearshifting corresponds to the passage to a higher transmission ratio, vice-versa with reference to the rear derailleur, downward gearshifting corresponds to the passage to a higher transmission ratio and upward gearshifting corresponds to the passage to a lower transmission ratio.

The movement in the two directions of a derailleur is obtained through an actuation device mounted on the handlebars so as to be easily manoeuvrable by the cyclist.

By convention, the actuation device of the front derailleur is situated on the left handgrip of the handlebars, and vice-versa the actuation device of the rear derailleur is located on the right handgrip.

More specifically, in a mechanical gearshift, each derailleur is moved between the toothed wheels, in a first direction by a traction action exerted by an normally sheathed inextensible cable (commonly called Bowden cable), in a second opposite direction by the release of the traction of the cable and by the elastic return action of a spring provided in the derailleur itself.

Normally, the direction in which the movement is caused by the release of the traction of the cable and by the return spring is that of a downward gearshifting; vice-versa, the traction action of the control cable takes place in the direction of an upward gearshifting, in which the chain moves from a wheel having a smaller diameter to a wheel having a larger diameter.

In the actuation device, the control cable is actuated in traction or in release through winding and unwinding on a rotor element, commonly called cable-winding bush, the rotation of which is controlled by the cyclist with a suitable control lever, or with two control levers (a first lever for the uphill gearshifting and a second lever for the downhill gearshifting).

In any case, the actuation device must provide that the cable-winding bush be held immobile in rotation in a number of predetermined angular positions, angularly spaced apart each other by predetermined indexing angles and corresponding to the different positions of the derailleur required by the different ratios, i.e. on the different toothed wheels of the gearshift. This function is obtained with the so-called indexers, many types of which are known in the art, variously active between the cable-winding bush and the fixed casing of the device.

A widely used type of indexer comprises an indexing bush that is coaxial to the cable-winding bush and is integral in rotation with it.

Typically the indexing bush comprises an externally toothed sector, with a number of teeth corresponding to the maximum number of single clicks that are needed to go from the toothed wheel with the smallest diameter to the toothed wheel with the largest diameter (or vice-versa). The teeth are angularly spaced apart each other by the predetermined indexing angles. Preferably, the teeth are angularly spaced apart each other by a same predetermined indexing angle.

On such a toothed sector a ratchet-gear mechanism is active to removably hold the cable-winding bush in the predetermined angular positions, corresponding to the different positions of the derailleur required by the different ratios.

The Applicant has found that such an actuation device can, however, be subject to the drawback of a missed upward gearshifting. In other words, although the cyclist acts correctly on the suitable control lever, the upward gearshifting is not completed, i.e. the transmission chain does not actually arrive to engage the toothed wheel having larger diameter and therefore remains on the toothed wheel on which it was located prior to the actuation of the cyclist on the control lever. In jargon, this case is also known as "refused gearshifting".

The problem at the basis of the present invention is that of making an actuation device for a control cable for a bicycle gearshift that allows the reliability of the upward gearshifting to be ensured in a simple and effective manner.

JP S63 269795 A discloses the preamble of claim 1.

The present invention therefore, in a first aspect thereof, relates to an actuation device for a control cable for a bicycle gearshift according to claim 1; preferred characteristics are given in the dependent claims.

The present invention therefore relates to an actuation device for a control cable for a bicycle gearshift, comprising:
- a casing, configured for fixing to bicycle handlebars,
- a cable-winding bush, on which the control cable is wound and which is angularly mobile in the casing about a main axis of the device,
- an indexing bush coaxial to the cable-winding bush and associated with it to removably hold the cable-winding bush in predetermined angular positions, angularly spaced apart each other by predetermined indexing angles,
- a manoeuvring mechanism, operative on the cable-winding bush to rotate it in a first angular direction about the main axis of the device, to obtain an upward gearshifting,
wherein between the cable-winding bush and the indexing bush it is provided a coupling with a predetermined circumferential clearance corresponding to a predetermined gearshifting extra-stroke angle.

In the present description and in the following claims, the term "gearshifting extra-stroke" or "extra-stroke" means an additional stroke (extra-stroke indeed) to which the transmission chain is subjected with respect to the stroke geometrically necessary (which in jargon is indicated as "indexing stroke") in the gearshifting to reach the near toothed wheel, in particular the near toothed wheel of greater diameter in the case of upward gearshifting. Such an indexing stroke and such an extra-stroke are linear strokes of the transmission chain in the axial direction of the toothed wheels of the gearshift and basically correspond to (indexing and extra-stroke) angles of rotation of the cable-winding bush.

Advantageously, the coupling with a predetermined circumferential clearance, corresponding to a predetermined gearshifting extra-stroke angle, makes it possible to obtain in a simple and effective manner a desired gearshifting extra-stroke during the upward gearshifting. With such an extra-stroke an excellent certainty of gearshifting is ensured, in the sense that the risk of refused gearshifting is eliminated or at least drastically reduced.

The present invention also relates to an integrated brake-gearshift actuation device of a bicycle according to claim 11.

In particular, such an integrated brake-gearshift actuation device of a bicycle comprises an actuation device for a brake of the bicycle and the actuation device for a control cable for a gearshift of the bicycle just indicated.

The actuation device for a control cable for a bicycle gearshift and the integrated brake-gearshift actuation device of a bicycle of the present invention can comprise one or more of the following preferred features, taken individually or in combination.

According to the invention, the manoeuvring mechanism comprises a first gearshift lever, which is angularly mobile with respect to the casing about the main axis of the device, in the first angular direction starting from a neutral position to obtain the upward gearshifting,
in which the first gearshift lever acts on the cable-winding bush so as to:
(i) impose a first rotation of the cable-winding bush with respect to the casing and to the indexing bush in the first angular direction by the predetermined gearshifting extra-stroke angle,
(ii) impose a second rotation of the cable-winding bush with respect to the casing, together with the indexing bush, in the first angular direction by the respective predetermined indexing angle, and
(iii) allow a third rotation of the cable-winding bush with respect to the casing and to the indexing bush in a second angular direction opposite to the first angular direction by the predetermined gearshifting extra-stroke angle.

Preferably, elastic means are active between the first gearshift lever and the casing, in which said elastic means tend to take the first gearshift lever again into the neutral position. Such elastic means can be a simple ring-shaped torsion spring, mounted in the casing coaxially to the main axis of the device and constrained at one end to the casing and at the other end to the first lever.

According to the invention, the cable-winding bush comprises a rotation pin arranged along the main axis of the device.

Advantageously, the rotation pin of the cable-winding bush can be housed in a suitable rotation seat made on the casing and can be easily connected to the first lever.

Preferably, the coupling between the cable-winding bush and the indexing bush comprises at least one protrusion, protruding in axial direction and in position eccentric from the indexing bush or from the cable-winding bush, and at least one corresponding recess, axially formed in the cable-winding bush or in the indexing bush, respectively, wherein the predetermined circumferential clearance is provided between the at least one recess and the at least one protrusion.

In an alternative that is also preferred, the coupling between the cable-winding bush and the indexing bush comprises at least one protrusion, radially protruding from the rotation pin, and at least one corresponding recess, radially formed in the indexing bush, wherein the predetermined circumferential clearance is provided between the at least one recess and the at least one protrusion.

More preferably, the aforementioned at least one protrusion and at least one recess extend along an arc of circumference having centre substantially on the main axis of the device.

In a further alternative that is also preferred, the coupling between the cable-winding bush and the indexing bush comprises a pair of axial toothings of the cable-winding bush and of the indexing bush, respectively, which mutually engage with the predetermined circumferential clearance.

In an even further alternative that is also preferred, the coupling between the cable-winding bush and the indexing bush comprises a shaped hole of the indexing bush that extends axially and a corresponding shaped portion of the rotation pin, in which the predetermined circumferential clearance is provided between the shaped hole and the shaped portion.

More preferably, the shaped portion has substantially quadrilateral cross section, with a pair of opposite sides that are substantially rectilinear and parallel.

Even more preferably, the shaped portion has the other pair of opposite sides shaped like an arc of circumference having centre substantially on the main axis of the device.

According to the invention, the manoeuvring mechanism comprises a second gearshift lever, which acts on the indexing bush to allow a rotation thereof, together with the cable-winding bush, in the second angular direction about the main axis of the device, so as to obtain a downward gearshifting.

Preferably, the predetermined gearshifting extra-stroke angle is greater than zero and less than or equal to the minimum value among the predetermined indexing angles.

Further features and advantages of the invention will become clearer from the following description of preferred embodiments thereof, made with reference to the attached drawings. In such drawings:
- figure 1 is a perspective view of a first embodiment of an actuation device for a control cable for a bicycle gearshift according to the invention, in particular it concerns an integrated brake-gearshift actuation device of a bicycle;
- figure 2 is a further perspective view, partially sectioned, of the device of figure 1;
- figures 3 and 4 are a perspective view and a side view of part of the device of figure 1, without a casing of the device;
- figures 5 and 6 are perspective views of part of the device of figures 4 and 5, without a brake lever;
- figure 7 is a perspective view of part of the device of figures 5 and 6, without a first gearshift lever;
- figure 8 is an exploded perspective view of part of the device of figure 7, without a second gearshift lever;
- figures 9 and 10 are a cutaway perspective view and a cross section view - according to a plane perpendicular to the main axis of the device - of part of the device of figure 8, in particular of a cable-winding bush and of an indexing bush;
- figures 11-14 are side and partially sectioned views (according to a plane perpendicular to the main axis of the device) of the device of figure 7, which show successive positions during the operation of the device, in particular during an upward gearshifting;
- figure 15 is an exploded perspective view (analogous to figure 8) of part of a second embodiment of an actuation device for a control cable for a bicycle gearshift according to the invention;
- figures 15a and 15b are perspective views of part of the device of figure 15, in particular of a cable-winding bush and of an indexing bush;
- figure 16 is an exploded perspective view (analogous to figure 15) of part of a third embodiment of an actuation device for a control cable for a bicycle gearshift according to the invention;
- figures 16a and 16b are perspective views of part of the device of figure 16, in particular of a cable-winding bush and of an indexing bush, exploded (figure 16a) and in cross section according to a plane perpendicular to the main axis of the device (figure 16b);
- figure 17 is an exploded perspective view (analogous to figure 16) of part of a fourth embodiment of an actuation device for a control cable for a bicycle gearshift according to the invention;
- figure 17a is a side view of part of the device of figure 17, in particular of the assembly of indexing bush and rotation pin;
- figure 18 is an exploded perspective view (analogous to figure 17) of part of a fifth embodiment of an actuation device for a control cable for a bicycle gearshift according to the invention;
- figures 18a, 18b and 18c are side views of part of the device of figure 18, in particular of a cable-winding bush (figure 18a), of an indexing bush (figure 18b) and of the assembly of indexing bush and rotation pin (figure 18c).

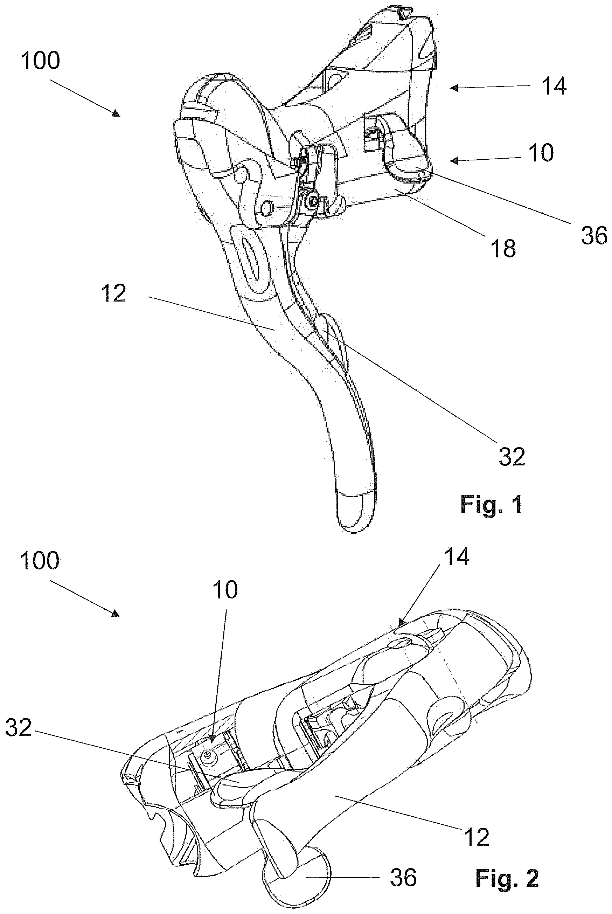

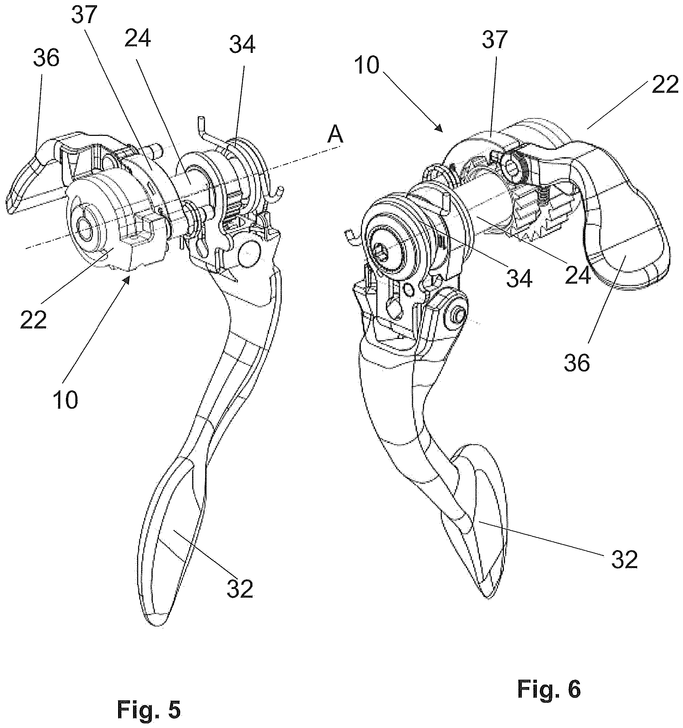

With initial reference to figures 1-14 a first embodiment of actuation device for a control cable (not shown) for a gearshift of a bicycle in accordance with the present invention is shown. The actuation device is wholly indicated with 10.

In particular, in figures 1 and 2 the actuation device 10 is included in an integrated brake-gearshift actuation device 100 of the bicycle. The integrated actuation device comprises, as well as the actuation device 10, an actuation device for a brake (not shown) of the bicycle. Figures 1-4 show a brake lever 12 included in the actuation device for the brake.

More specifically, figures 1-14 show the actuation device 10 of the control cable for the rear derailleur of the bicycle.

With particular reference to figures 1 and 2, the actuation device 10 is mounted on bicycle handlebars (not shown), in particular of the type used on racing bicycles.

The actuation device 10 comprises a casing 14, which is fixed to the handlebars in conventional manner, like for example a strap 16. The casing 14 comprises a body 18 extending along an axis A of the device 10.

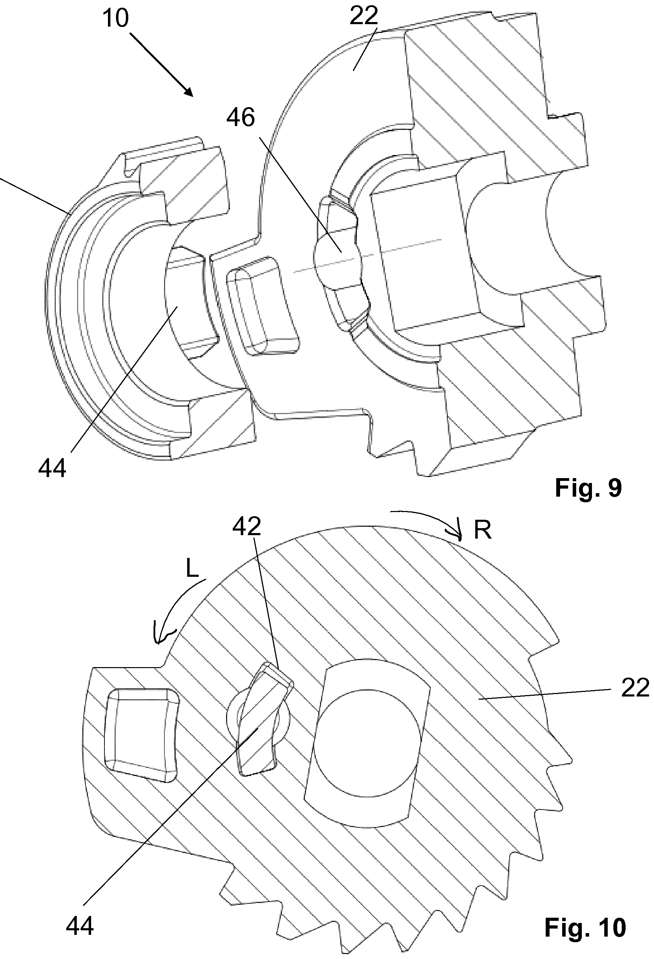

As will be clear hereafter, the main axis A is the main reference axis for the elements that are part of the device 10; all of the indications of direction and the like, such as "axial", "radial", "circumferential", "diametral" and the like will refer with respect to it; equally, the indications "outwards" and "inwards" referring to radial directions should be understood as away from the axis A or towards the axis A. Two opposite angular directions are also defined about the axis A, indicated with R and L, the first in the clockwise direction, the second in the anti-clockwise direction, observing the device 10 as represented in figure 10.

The device 10 comprises a cable-winding bush 22, to which the control cable is fixed and on which it is wound. The cable-winding bush 22 is mounted in the body 18 of the casing 14 and is angularly mobile about the axis A.

The cable-winding bush 22 comprises a rotation pin 24 arranged along the axis A. The rotation pin 24 is integral with the cable-winding bush 22.

The rotation pin 24 is housed in a suitable rotation seat (not shown) made in the body 18 of the casing 14.

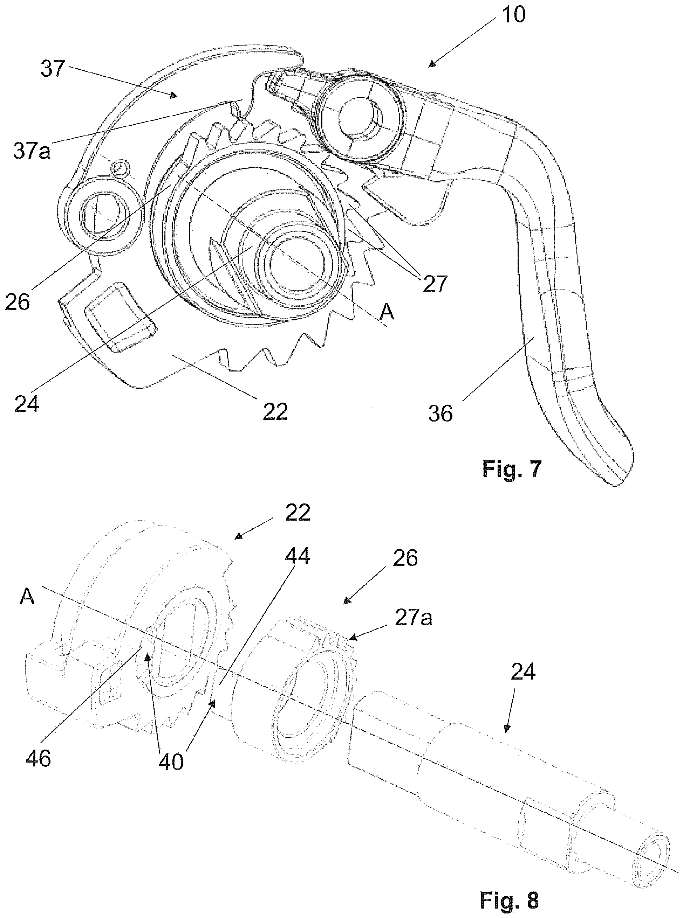

The device 10 also comprises an indexing bush 26 that is coaxial to the cable-winding bush 22 and that is associated with it to removably hold the cable-winding bush 22 in predetermined angular positions with respect to the casing 14, according to the selected transmission ratio of the gearshift. Such angular positions are angularly spaced apart each other by predetermined indexing angles α and are defined on the indexing bush 26 by a plurality of corresponding teeth 27 made on a radially outer toothed sector 27a of the indexing bush 26 (see in particular figure 7). Preferably, the teeth 27 are angularly spaced apart each other by a same predetermined indexing angle α.

The device 10 also comprises a manoeuvring mechanism, to obtain upward or downward gearshifting, wholly indicated with 30, operative on the cable-winding bush 22 to rotate it in the angular directions R and L about the axis A.

The manoeuvring mechanism 30 comprises a first gearshift lever 32, which is angularly mobile with respect to the casing 14 about the axis A, in the angular direction R starting from a neutral position to obtain the upward gearshifting.

The first gearshift lever 32 is connected to the rotation pin 24 of the cable-winding bush 22.

Elastic means 34 are active between the first gearshift lever 32 and the casing 14, and such elastic means 34 tend to take the first gearshift lever 32 again into the neutral position.

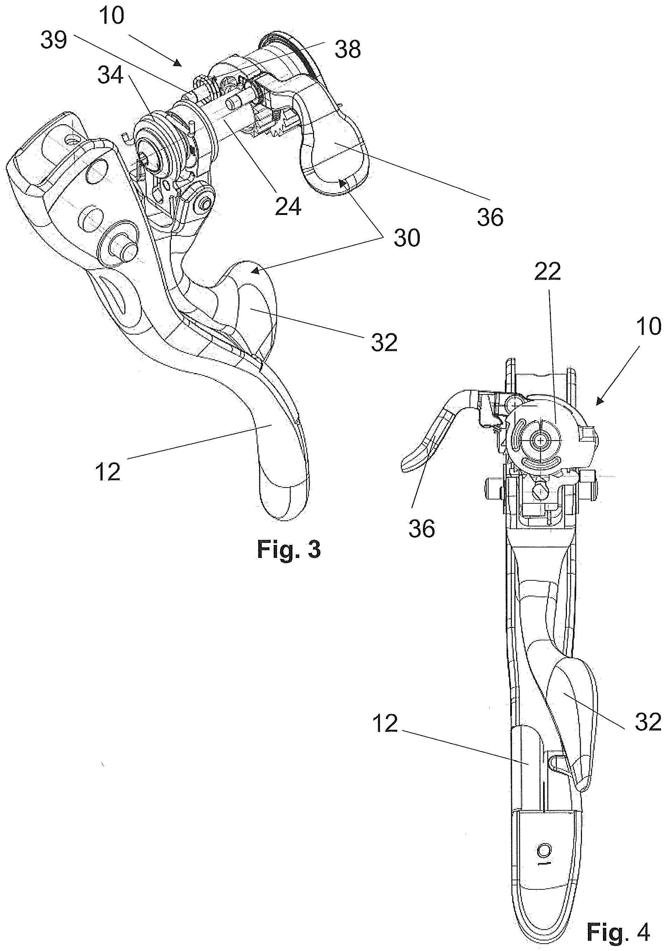

In the non-limiting example illustrated, such elastic means are a ring-shaped torsion spring 34 (see figures 3, 5 and 6), mounted in the casing 14 coaxially to the axis A and constrained at one end to the casing 14 and at the other end to the first gearshift lever 32.

The connection between first gearshift lever 32 and rotation pin 24 is *per sé* conventional and therefore will not be described in detail hereafter.

The manoeuvring mechanism 30 comprises a second gearshift lever 36, which acts on the indexing bush 26 to allow a rotation thereof, together with the cable-winding bush 22, in the angular direction L about the axis A, so as to obtain a downward gearshifting.

As shown in figure 7, the second gearshift lever 36 acts on a rocker 37 hinged on a pin 39 integral with the cable-winding bush 22. The rocker 37 comprises a pawl 37a that acts on the teeth 27 of the toothed sector 27a of the indexing bush 26.

In particular, by actuating the second gearshift lever 36, the rocker 37 is moved away from the toothed sector 27a, so that the pawl 37a disengages from a tooth 27. Once downward gearshifting has occurred, the rocker 37 goes back towards the toothed sector 27a through the effect of elastic means 38, for example a torsion spring (for example arranged at such a pin 39), and the pawl 37a locks the next tooth 27 in the angular direction L with respect to that which it has previously disengaged.

The downward gearshifting mechanism that uses the assembly of second gearshift lever 36, rocker 37, pawl 37a and toothed sector 27a is of the conventional type and is not specified any further.

In accordance with a characterising aspect of the invention, between the cable-winding bush 22 and the indexing bush 26 it is provided a coupling 40 with a predetermined circumferential clearance 42, corresponding to a predetermined gearshifting extra-stroke angle β.

The coupling 40 makes it possible to obtain the desired gearshifting extra-stroke during the upward gearshifting, obtained by actuating the first gearshift lever 32.

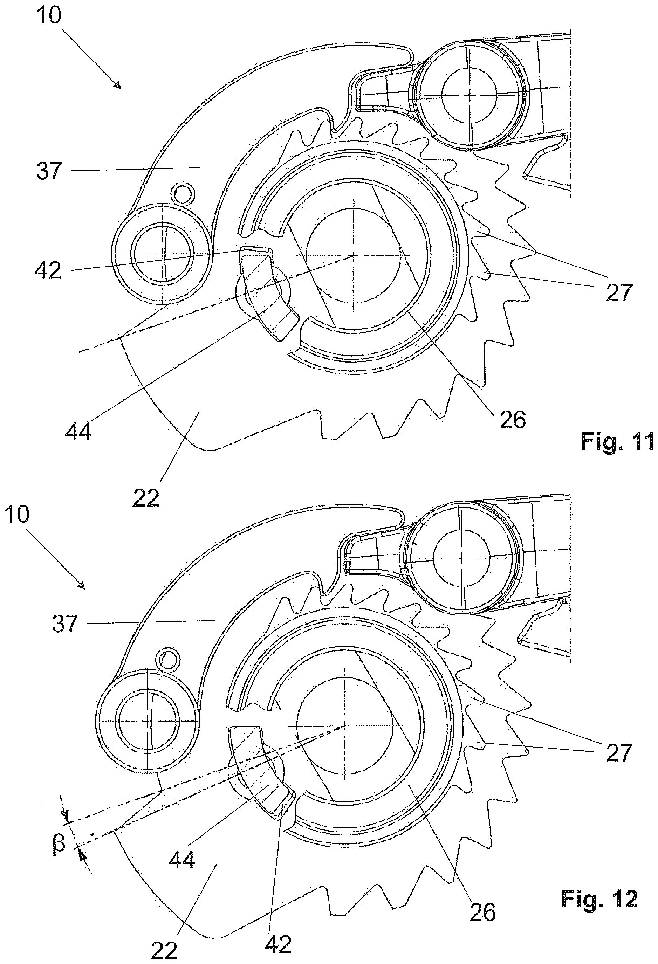

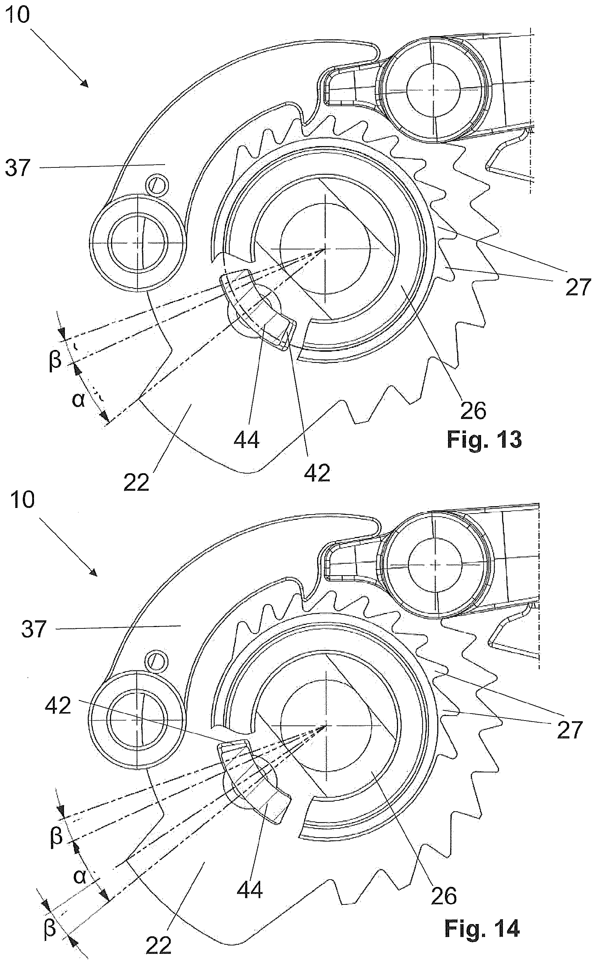

In particular, with reference to figures 11-14, the first gearshift lever 32 acts on the cable-winding bush 22 so as to:
(i) impose a first rotation of the cable-winding bush 22 with respect to the casing 14 and to the indexing bush 26 in the angular direction R by the predetermined gearshifting extra-stroke angle β (figure 12),
(ii) impose a second rotation of the cable-winding bush 22 with respect to the casing 14, together with the indexing bush 26, in the angular direction R by the respective predetermined indexing angle α (figure 13), and
(iii) allow a third rotation of the cable-winding bush 22 with respect to the casing 14 and to the indexing bush 26 in the angular direction L - opposite to the angular direction R - by the predetermined gearshifting extra-stroke angle β (figure 14).

As shown in figures 8-14, the coupling 40 between the cable-winding bush 22 and the indexing bush 26 comprises a protrusion 44, protruding in axial direction and in position eccentric from the indexing bush 26, and a corresponding recess 46, axially formed in the cable-winding bush 22. The predetermined circumferential clearance 42 is provided between the recess 46 and the protrusion 44.

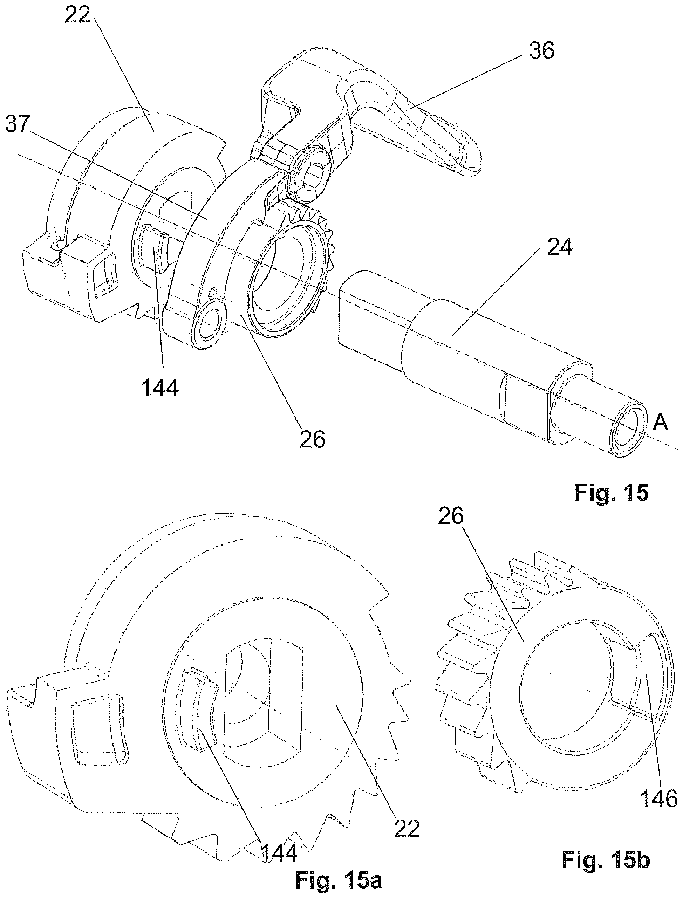

Figures 15, 15a and 15b show a second embodiment of the actuation device 10 according to the invention. In such figures, structural elements that are identical or equivalent from the functional point of view to those of the first embodiment of the device 10 of the invention (figures 1-14) will be attributed the same reference numerals and they will not be described any further.

In particular, the second embodiment of the device 10 differs from the first embodiment of the device 10 in that the coupling 40 between the cable-winding bush 22 and the indexing bush 26 comprises a protrusion 144, protruding in axial direction and in position eccentric from the cable-winding bush 22, and a corresponding recess 146, axially formed in the indexing bush 26. The predetermined circumferential clearance 42 is provide between the recess 146 and the protrusion 144.

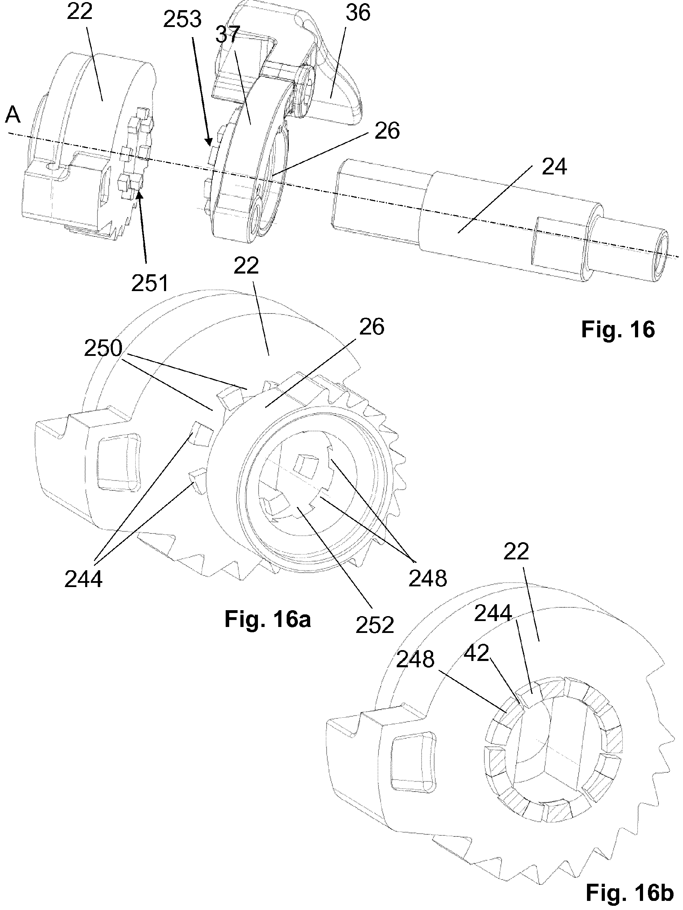

Figures 16, 16a and 16b show a third embodiment of the actuation device 10 according to the invention. In such figures, structural elements that are identical or equivalent from the functional point of view to those of the first embodiment of the device 10 of the invention (figures 1-14) will be attributed the same reference numerals and they will not be described any further.

In particular, the third embodiment of the device 10 differs from the first embodiment of the device 10 in that the coupling 40 between the cable-winding bush 22 and the indexing bush 26 comprises a plurality of protrusions 244, protruding in axial direction and in a same position eccentric from the cable-winding bush 22, and a plurality of protrusions 248, protruding in axial direction and in a same position eccentric from the indexing bush 26.

A plurality of insertion spaces 250 for the protrusions 248 are defined between the protrusions 244, just as a plurality of insertion spaces 252 for the protrusions 244 are defined between the protrusions 248. The insertion spaces 250, 252 have a greater circumferential extension than that of the respective protrusions 248, 244, in such a way that the predetermined circumferential clearance 42 is provided between the cable-winding bush 22 and the indexing bush 26.

Preferably, all of the protrusions 244 (and all of the corresponding insertion spaces 252) have equal circumferential extension, just as all of the protrusions 248 (and all of the corresponding insertion spaces 250) have equal circumferential extension.

More preferably, all of the protrusions 244 have an equal circumferential extension that is equivalent to the equal circumferential extension of all of the protrusions 248, just as all of the insertion spaces 252 have an equal circumferential extension that is equivalent to the equal circumferential extension of all of the insertion spaces 250.

Basically, the protrusions 244 with the insertion spaces 250 and the protrusions 248 with the insertion spaces 252 define a pair of axial toothings 251, 253 of the cable-winding bush 22 and of the indexing bush 26, respectively, which engage with each other with the predetermined circumferential clearance 42.

In a variant that is not illustrated, the insertion spaces 250, 252 are axially formed, at least partially, in the cable-winding bush 22 and in the indexing bush 26, respectively. In this case they become, in practice, receiving seats for at least part of the protrusions 248 and 244, respectively.

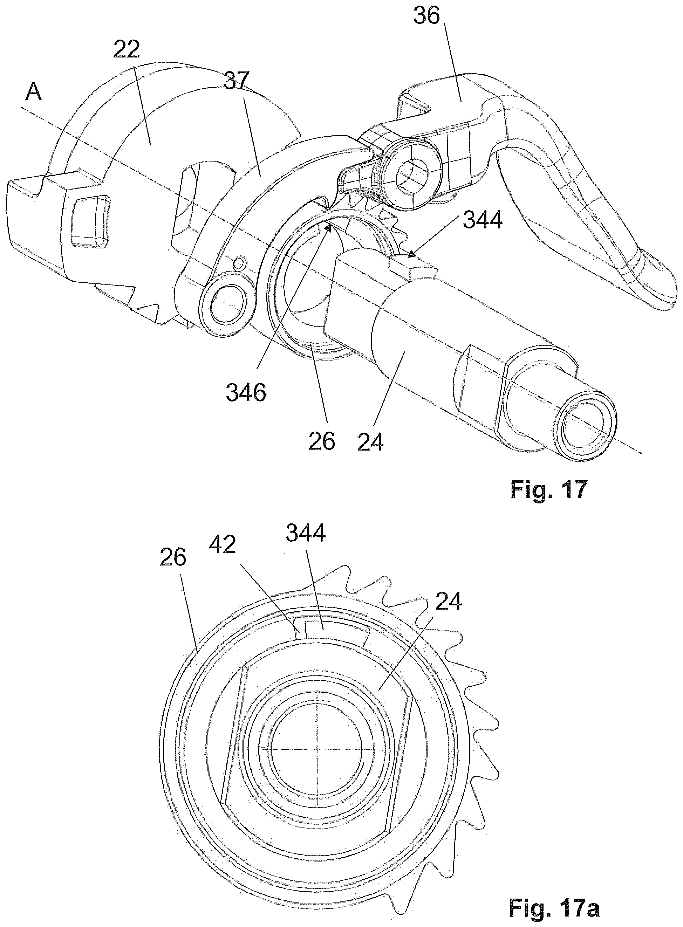

Figures 17 and 17a show a fourth embodiment of the actuation device 10 according to the invention. In such figures, structural elements that are identical or equivalent from the functional point of view to those of the first embodiment of the device 10 of the invention (figures 1-14) will be attributed the same reference numerals and they will not be described any further.

In particular, the fourth embodiment of the device 10 differs from the first embodiment of the device 10 in that the coupling 40 between the cable-winding bush 22 and the indexing bush 26 comprises a protrusion 344, radially protruding from the rotation pin 24, and a corresponding recess 346, radially formed in the indexing bush 26. The predetermined circumferential clearance 42 is provided between the recess 346 and the protrusion 344. It is worth repeating that the rotation pin 24 is integral with the cable-winding bush 22.

The protrusion 344 and the recess 346 extend along an arc of circumference having centre substantially on the axis A.

In a variant that is not illustrated, the coupling 40 between the cable-winding bush 22 and the indexing bush 26 comprises a protrusion, radially protruding from a substantially circular hole of the indexing bush 26 (at least one portion of the rotation pin being inserted into such a hole), and a corresponding recess, radially formed in the rotation pin 24. The predetermined circumferential clearance is provided between the aforementioned recess and the aforementioned protrusion.

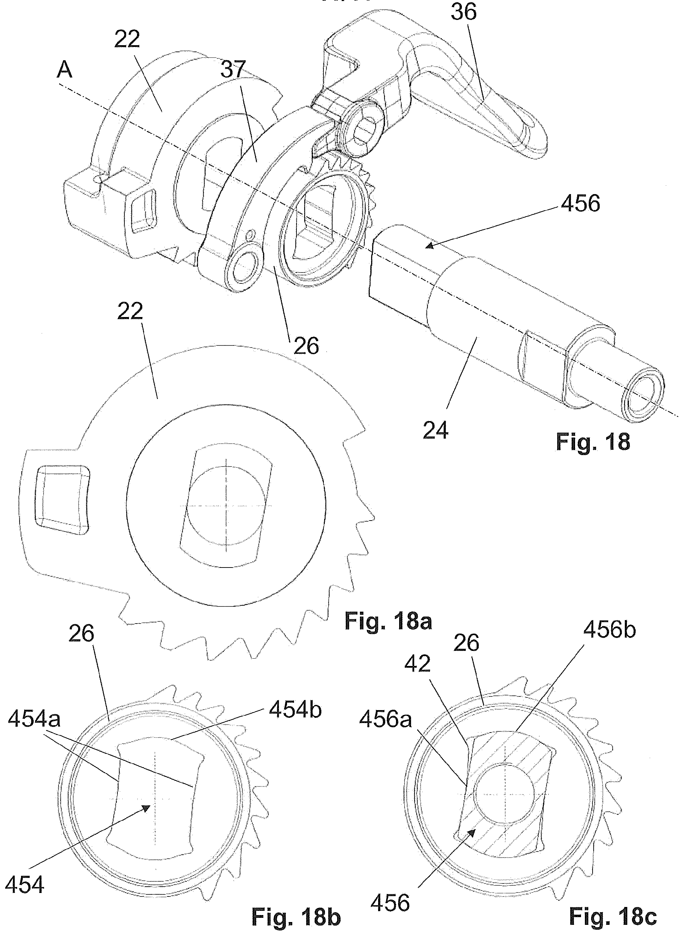

Figures 18 and 18a-18c show a fifth embodiment of the actuation device 10 according to the invention. In such figures, structural elements that are identical or equivalent from the functional point of view to those of the first embodiment of the device 10 of the invention (figures 1-14) will be attributed the same reference numerals and they will not be described any further.

In particular, the fifth embodiment of the device 10 differs from the first embodiment of the device 10 in that the coupling 40 between the cable-winding bush 22 and the indexing bush 26 comprises a shaped hole 454 of the indexing bush 26 that extends axially and a corresponding shaped portion 456 of the rotation pin 24, in which the predetermined circumferential clearance 42 is provided between the shaped hole 454 and the shaped portion 456.

As shown in particular in figure 18c, the shaped portion 456 has substantially quadrilateral cross section, with a pair of opposite sides 456a that are substantially rectilinear and parallel. The other pair of opposite sides 456b of the shaped portion 456 is shaped like an arc of circumference having centre substantially on the axis A.

As shown in particular in figures 18b and 18c, the shaped hole 454 has substantially quadrilateral cross section, with a pair of opposite sides 454a that cooperate with clearance with the pair of opposite sides 456a of the shaped portion 456 (so as to allow a relative rotation between shaped portion 456 and shaped hole 454, which corresponds to the predetermined circumferential clearance 42). The other pair of opposite sides 454b of the shaped hole 454 is shaped like an arc of circumference having centre substantially on the axis A and slidingly cooperates with the pair of opposite sides 456b of the shaped portion 456.

The operation of the actuation device 10 according to the invention is already clear from the above and is totally analogous for all of the embodiments and variants described. It is further specified hereafter, in reference to the first embodiment (figures 11-14), that of the other embodiments and variants being totally analogous.

Thanks to the coupling 40 with the predetermined circumferential clearance 42 the following operation in steps of the actuation device 10 according to the invention is obtained.

In a first actuation step of the first gearshift lever 32, the cable-winding bush 22 rotates by the predetermined gearshifting extra-stroke angle β whereas the indexing bush 26 stays immobile (with respect to the casing 14) thanks to the predetermined circumferential clearance 42 of the coupling 40 (figure 12).

Thereafter the protrusion 44 goes into abutment in the recess 46 so that the cable-winding bush 22 pulls the indexing bush 26 by an angular stroke equal to the respective predetermined indexing angle α (figure 13).

The transmission chain follows the cable-winding bush 22 and thus so far it has already travelled an extra space (extra-stroke) with respect to the indexing stroke, i.e. corresponding to the angular stroke corresponding to the gearshifting extra-stroke angle β added to the respective indexing angle α. In other words the transmission chain is not in a position of ordinary engagement of the next larger toothed wheel, but further forward (extra-stroke) by a distance corresponding to the gearshifting extra-stroke angle β.

Thereafter there is the release of the first gearshift lever 32 and the cable-winding bush 22 goes back by the gearshifting extra-stroke angle β, whereas the indexing bush 26 stays immobile (with respect to the casing 14) again thanks to the predetermined circumferential clearance between protrusion 44 and recess 46 (figure 14).

In this way the transmission chain, which follows the rotation of the cable-winding bush 22, after having been in extra-stroke position during the gearshifting (figure 13), goes back by a stroke corresponding to the gearshifting extra-stroke angle β up to the position of ordinary engagement of the next larger toothed wheel.

Therefore, thanks to the coupling 40 with the predetermined circumferential clearance 42, an excellent reliability of the upward gearshifting is obtained in simple and effective manner, ensuring that the transmission chain that must engage the next larger toothed wheel moves by an extra-stroke with respect to the only indexing stroke, which is then recovered at the end of gearshifting, so that the transmission chain remains exactly in the engagement position of the larger toothed wheel (indexing position).

Basically, in the aforementioned three steps, the cable-winding bush 22 carries out a first rotation in the angular direction R by the predetermined gearshifting extra-stroke angle β (figure 12), then carries out a second rotation in the angular direction R by the respective predetermined indexing angle α (figure 13), and finally carries out a third rotation in the angular direction L by the predetermined gearshifting extra-stroke angle β (figure 14).

It should be observed that, once the upward gearshifting has occurred, the pawl 37a of the rocker 37 locks the tooth 27 (of the toothed sector 27a of the indexing bush 26) that is next in the angular direction R with respect to that at which it was engaged before the gearshifting that had disengaged before (in figures 11 and 12 the pawl 27 engages the second tooth 27, whereas in figures 13 and 14 the pawl 37a engages the third tooth 27, i.e. the next tooth in the angular direction R). The passage of the pawl 37a between the two teeth 27 is carried out substantially automatically thanks to the asymmetric shape (substantially sawtooth) of the profile of the teeth 27 themselves and of the pawl 37a (as well as by the elastic means 38 that pull back the rocker 37 towards the toothed sector 27a). Such passage is of conventional type and is not specified any further. Preferably, the predetermined gearshifting extra-stroke angle β is greater than zero and less than or equal to the minimum value among the predetermined indexing angles α. For example, in the case of an indexing angle of 13.6° the gearshifting extra-stroke angle can be of 5°.

Of course, those skilled in the art can bring numerous modifications and variants to the embodiments described above in order to satisfy specific and contingent requirements, all of which are in any case encompassed by the scope of protection as defined by the following claims.

## Claims

1. Actuation device (10) for a control cable for a bicycle gearshift, comprising:
- a casing (14), configured for fixing to bicycle handlebars,
- a cable-winding bush (22), on which the control cable is wound and which is angularly mobile in the casing (14) about a main axis (A) of the device (10),
- a rotation pin (24) of the cable-winding bush (22) arranged along the main axis (A),
- an indexing bush (26) coaxial to the cable-winding bush (22) and associated with it to removably hold the cable-winding bush (22) in predetermined angular positions, angularly spaced apart from each other by predetermined indexing angles (α),
- a manoeuvring mechanism (30), operative on the cable-winding bush (22) to rotate it in a first angular direction (R) about the main axis (A) of the device (10), to obtain an upward gearshifting,
wherein between the cable-winding bush (22) and the indexing bush (26) it is provided a coupling (40) with a predetermined circumferential clearance (42) corresponding to a predetermined gearshifting extra-stroke angle (β), wherein the manoeuvring mechanism (30) comprises a first gearshift lever (32), which is angularly mobile with respect to the casing (14) about the main axis (A) of the device (10), in the first angular direction (R) starting from a neutral position to obtain the upward gearshifting,
wherein the first gearshift lever (32) acts on the cable-winding bush so as to:
- impose a first rotation of the cable-winding bush (22) with respect to the casing (14) and to the indexing bush (26) in the first angular direction (R) by the predetermined gearshifting extra-stroke angle (β),
- impose a second rotation of the cable-winding bush (22) with respect to the casing (14), together with the indexing bush (26), in the first angular direction (R) by the respective predetermined indexing angle (α), and
- allow a third rotation of the cable-winding bush (22) with respect to the casing (14) and to the indexing bush (26) in a second angular direction (L) opposite to the first angular direction (R) by the predetermined gearshifting extra-stroke angle (β),
wherein the manoeuvring mechanism (30) comprises a second gearshift lever (36), which acts on the indexing bush (26) to allow a rotation thereof, together with the cable-winding bush (22), in the second angular direction (L) about the main axis (A) of the device (10), so as to obtain a downward gearshifting.

2. Device (10) according to claim 1, wherein elastic means (34) are active between the first gearshift lever (32) and the casing (14), wherein said elastic means (34) tend to take the first gearshift lever (32) again into the neutral position.

3. Device (10) according to any one of the previous claims, wherein the coupling (40) between the cable-winding bush (22) and the indexing bush (26) comprises at least one protrusion (44, 144), protruding in axial direction and in eccentric position from the indexing bush (26) or from the cable-winding bush (22), and at least one corresponding recess (46, 146), axially formed in the cable-winding bush (22) or in the indexing bush (26), respectively, wherein the predetermined circumferential clearance (42) is provided between the at least one recess (46, 146) and the at least one protrusion (44, 144).

4. Device (10) according to claim 1, wherein the coupling (40) between the cable-winding bush (22) and the indexing bush (26) comprises at least one protrusion (344), protruding radially from the rotation pin (24), and at least one corresponding recess (346), formed radially in the indexing bush (26), wherein the predetermined circumferential clearance is provided between the at least one recess (346) and the at least one protrusion (344).

5. Device (10) according to claim 3 or 4, wherein the at least one protrusion (44, 144, 344) and the at least one recess (46, 146, 346) extend along an arc of circumference having centre substantially on the main axis (A) of the device (10).

6. Device (10) according to any one of claims 1 to 2, wherein the coupling (40) between the cable-winding bush (22) and the indexing bush (26) comprises a pair of axial toothings (251, 253) of the cable-winding bush (22) and of the indexing bush (26), respectively, which mutually engage with the predetermined circumferential clearance (42).

7. Device (10) according to claim 1, wherein the coupling (40) between the cable-winding bush (22) and the indexing bush (26) comprises a shaped hole (454) of the indexing bush (26) that extends axially and a corresponding shaped portion (456) of the rotation pin (24), wherein the predetermined circumferential clearance (42) is provided between the shaped hole (454) and the shaped portion (456).

8. Device (10) according to claim7, wherein the shaped portion (456) has substantially quadrilateral cross section, with a pair of opposite sides (456a) that are substantially rectilinear and parallel.

9. Device (10) according to claim 8, wherein the shaped portion (456) has the other pair of opposite sides (456b) shaped like an arc of circumference having centre substantially on the main axis (A) of the device (10).

10. Device (10) according to any one of the previous claims, wherein the predetermined gearshifting extra-stroke angle (β) is greater than zero and less than or equal to the minimum value among the predetermined indexing angles (α).

11. Integrated brake-gearshift actuation device (100) of a bicycle, comprising an actuation device for a bicycle brake and an actuation device (10) for a control cable for a gearshift of the bicycle according to any one of the previous claims.

## Patentansprüche

1. Betätigungsvorrichtung (10) für ein Steuerseil einer Fahrradgangschaltung, mit:
- einem Gehäuse (14), das zum Befestigen an Fahrradlenkern ausgebildet ist,
- einer Seilwickelbuchse (22), auf der das Steuerseil aufgewickelt wird, und das in dem Gehäuse (14) um eine Hauptachse (A) der Vorrichtung (10) in einer Winkelrichtung beweglich ist,
- einem Drehstift (24) der Seilwickelbuchse (22), der entlang der Hauptachse (A) angeordnet ist,
- einer Indizierbuchse (26), die gleichachsig zu der Seilwickelbuchse (22) angeordnet und damit in Verbindung ist, um die Seilwickelbuchse (22) an vorbestimmten Winkelpositionen lösbar zu halten, die in Winkelrichtung voneinander durch vorbestimmte indizierende Winkel (α) beabstandet sind,
- einem Manövriermechanismus (30), der auf der Seilwickelbuchse (22) so wirkt, dass er sich in eine erste Winkelrichtung (R) um die Hauptachse (A) der Vorrichtung (10) dreht, um ein Aufwärts-Schalten zu erreichen,
wobei zwischen der Seilwickelbuchse (22) und der Indizierbuchse (26) eine Kupplung (40) mit einem vorbestimmten Zwischenraum in Umfangsrichtung (42) vorgesehen ist, der einem vorbestimmten Schaltzusatzhubwinkel (β) entspricht, wobei der Manövriermechanismus (30) einen ersten Ganghebel (32) aufweist, der winkelmäßig in Bezug auf das Gehäuse (14) um die Hauptachse (A) der Vorrichtung (10) in der ersten Winkelrichtung (R), beginnend aus einer Neutralstellung, zum Erhalten des Aufwärts-Schaltens bewegbar ist, wobei der erste Ganghebel (32) auf die Seilwickelbuchse einwirkt, um:
eine erste Drehung der Seilwickelbuchse (22) in Bezug auf das Gehäuse (14) und in Bezug auf die Indizierbuchse (26) in der ersten Winkelrichtung (R) um den vorbestimmten Schaltzusatzhubwinkel (β) hervorzurufen,
eine zweite Drehung der Seilwickelbuchse (22) in Bezug auf das Gehäuse (14) zusammen mit der Indizierbuchse (26) in der ersten Winkelrichtung (R) um den entsprechenden vorbestimmten Indizierwinkel (α) hervorzurufen, und
eine dritte Drehung der Seilwickelbuchse (22) in Bezug auf das Gehäuse (14) und auf die Indizierbuchse (26) in einer zweiten Winkelrichtung (L), die entgegengesetzt zu der ersten Winkelrichtung (R) ist, um den vorbestimmten Schaltzusatzhubwinkel (β) zu ermöglichen, wobei der Manövriermechanismus (30) einen zweiten Ganghebel (36) aufweist, der auf die Indizierbuchse (26) so einwirkt, dass eine Drehung zusammen mit der Seilwickelbuchse (22) in der zweiten Winkelrichtung (L) um die Hauptachse (A) der Vorrichtung (10) möglich ist, so dass ein Abwärts-Schalten erreicht wird.

2. Vorrichtung (10) nach Anspruch 1, wobei die elastische Einrichtung (34) zwischen dem ersten Ganghebel (32) und dem Gehäuse (14) wirksam ist, und wobei die elastische Einrichtung (34) die Tendenz hat, den ersten Ganghebel (32) wieder in die Neutralstellung zu bringen.

3. Vorrichtung (10) nach einem der vorhergehenden Ansprüche, wobei die Kupplung (40) zwischen der Seilwickelbuchse (22) und der Indizierbuchse (26) mindestens einen Vorsprung (44, 144), der in axialer Richtung und an exzentrischer Position aus der Indizierbuchse (26) oder aus der Seilwickelbuchse (22) hervorsteht, und mindestens eine entsprechende Vertiefung (46, 146) aufweist, die axial in der Seilwickelbuchse (22) oder in der Indizierbuchse (26) entsprechend ausgebildet ist, wobei der vorbestimmte Zwischenraum in Umfangsrichtung (42) zwischen der mindestens einen Vertiefung (46, 146) und dem mindestens einen Vorsprung (44, 144) vorgesehen ist.

4. Vorrichtung (10) nach Anspruch 1, wobei die Kupplung (40) zwischen der Seilwickelbuchse (22) und der Indizierbuchse (26) mindestens einen Vorsprung (344), der aus dem Drehstift (24) radial hervorsteht, und mindestens eine entsprechende Vertiefung (346) aufweist, die in der Indizierbuchse (26) radial ausgebildet ist, wobei der vorbestimmte Zwischenraum in Umfangsrichtung zwischen der mindestens einen Vertiefung (346) und dem mindestens einen Vorsprung (344) vorgesehen ist.

5. Vorrichtung (10) nach Anspruch 3 oder 4, wobei der mindestens eine Vorsprung (44, 144, 344) und die mindestens eine Vertiefung (46, 146, 346) sich entlang eines Bogens in Unfangsrichtung mit einem Mittelpunkt, der im Wesentlichen auf der Hauptachse (A) der Vorrichtung (10) liegt, erstrecken.

6. Vorrichtung (10) nach Anspruch 1 oder 2, wobei die Kupplung (40) zwischen der Seilwickelbuchse (22) und der Indizierbuchse (26) ein Paar aus axialen Verzahnungen (251, 253) der Seilwickelbuchse (22) und der Indizierbuchse (26) entsprechend aufweist, die gegenseitig mit dem vorbestimmten Zwischenraum in Umfangsrichtung (42) in Eingriff sind.

7. Vorrichtung (10) nach Anspruch 1, wobei die Kupplung (40) zwischen der Seilwickelbuchse (22) und der Indizierbuchse (26) eine geformte Bohrung (454) der Indizierbuchse (26), die sich axial erstreckt, und einen entsprechenden geformten Bereich (456) des Drehstifts (24) aufweist, wobei der vorbestimmte Zwischenraum in Umfangsrichtung (42) zwischen der geformten Bohrung (454) und dem geformten Bereich (456) vorgesehen ist.

8. Vorrichtung (10) nach Anspruch 7, wobei der geformte Bereich (456) im Wesentlichen einen vierseitigen Querschnitt hat, wobei ein zwei gegenüberliegende Seiten (456a) im Wesentlichen geradlinig und parallel sind.

9. Vorrichtung (10) nach Anspruch 8, wobei der geformte Bereich (456) die anderen zwei gegenüberliegenden Seiten (456b) so aufweist, dass sie wie ein Bogen in Umfangsrichtung geformt sind, dessen Mittelpunkt im Wesentlichen auf der Hauptachse (A) der Vorrichtung (10) liegt.

10. Vorrichtung (10) nach einem der vorhergehenden Ansprüche, wobei der vorbestimmte Schaltzusatzhubwinkel (β) größer als Null und kleiner oder gleich dem minimalen Wert aus den vorbestimmten Indizierwinkeln (α) ist.

11. Integrierte Brems- Gangschaltungsbetätigungsvorrichtung (100) eines Fahrrads, mit einer Betätigungsvorrichtung für eine Fahrradbremse und einer Betätigungsvorrichtung (10) für ein Steuerseil einer Gangschaltung des Fahrrads nach einem der vorhergehenden Ansprüche.

## Revendications

1. Dispositif d'actionnement (10) destiné à un câble de commande d'un dispositif de changement de vitesse de bicyclette, comprenant :
- un boîtier (14), configuré pour être fixé sur un guidon de bicyclette,
- une douille d'enroulement de câble (22), sur laquelle le câble de commande est enroulé et laquelle est angulairement mobile dans le boîtier (14) autour d'un axe principal (A) du dispositif (10),
- une broche de rotation (24) de la douille d'enroulement de câble (22) agencée le long de l'axe principal (A),
- une douille à crans (26) coaxiale à la douille d'enroulement de câble (22) et associée à celle-ci de sorte à maintenir de manière libérable la douille d'enroulement de câble (22) dans des positions angulaires prédéterminées, angulairement espacées les unes des autres par des angles de crans prédéterminés (α),
- un mécanisme de manoeuvre (30), agissant sur la douille d'enroulement de câble (22) de sorte à la faire tourner selon un premier sens angulaire (R) autour de l'axe principal (A) du dispositif (10), pour obtenir un changement de vitesse vers un rapport supérieur,
dans lequel entre la douille d'enroulement de câble (22) et la douille à crans (26), il est prévu un accouplement (40) avec un jeu circonférentiel prédéterminé (42) correspondant à un angle de course supplémentaire de changement de vitesse prédéterminé (β), où le mécanisme de manoeuvre (30) comprend un premier levier de changement de vitesse (32), lequel est angulairement mobile par rapport au boîtier (14) autour de l'axe principal (A) du dispositif (10), selon le premier sens angulaire (R) en partant d'une position de point mort pour obtenir le changement de vitesse vers un rapport supérieur,
dans lequel le premier levier de changement de vitesse (32) agit sur la douille d'enroulement de câble (22) de sorte à :
- imposer une première rotation de la douille d'enroulement de câble (22) par rapport au boîtier (14) et à la douille à crans (26) selon le premier sens angulaire (R) suivant l'angle de course supplémentaire de changement de vitesse prédéterminé (β),
- imposer une deuxième rotation de la douille d'enroulement de câble (22) par rapport au boîtier (14), faisant tourner en même temps la douille à crans (26), selon le premier sens angulaire (R) suivant l'angle de cran prédéterminé respectif (α), et
- permettre une troisième rotation de la douille d'enroulement de câble (22) par rapport au boîtier (14) et à la douille à crans (26) selon un deuxième sens angulaire (L) opposé au premier sens angulaire (R) suivant l'angle de course supplémentaire de changement de vitesse prédéterminé (β),
dans lequel le mécanisme de manoeuvre (30) comprend un deuxième levier de changement de vitesse (36), lequel agit sur la douille à crans (26) pour permettre une rotation de celle-ci, en même temps que la douille d'enroulement de câble (22), dans le deuxième sens angulaire (L) autour de l'axe principal (A) du dispositif (10), de sorte à obtenir un changement de vitesse vers un rapport inférieur.

2. Dispositif (10) selon la revendication 1, dans lequel des moyens élastiques (34) sont actifs entre le premier levier de changement de vitesse (32) et le boîtier (14), où lesdits moyens élastiques (34) tendent à ramener le premier levier de changement de vitesse (32) dans la position de point mort.

3. Dispositif (10) selon l'une quelconque des revendications précédentes, dans lequel l'accouplement (40) entre la douille d'enroulement de câble (22) et la douille à crans (26) comprend au moins une protubérance (44, 144), dépassant dans une direction axiale et dans une position excentrique par rapport à la douille à crans (26) ou par rapport à la douille d'enroulement de câble (22), et au moins un évidement correspondant (46, 146), ménagé axialement dans la douille d'enroulement de câble (22) ou dans la douille à crans (26), respectivement, où le jeu circonférentiel prédéterminé (42) est prévu entre le au moins un évidement (46, 146) et la au moins une protubérance (44, 144).

4. Dispositif (10) selon la revendication 1, dans lequel l'accouplement (40) entre la douille d'enroulement de câble (22) et la douille à crans (26) comprend au moins une protubérance (344), dépassant radialement par rapport à la broche de rotation (24), et au moins un évidement correspondant (346), ménagé radialement dans la douille à crans (26), où le jeu circonférentiel prédéterminé est prévu entre le au moins un évidement (346) et la au moins une protubérance (344).

5. Dispositif (10) selon la revendication 3 ou 4, dans lequel la au moins une protubérance (44, 144, 344) et le au moins un évidement (46, 146, 346) s'étendent le long d'un arc de circonférence dont le centre est sensiblement sur l'axe principal (A) du dispositif (10).

6. Dispositif (10) selon l'une quelconque des revendications 1 et 2, dans lequel l'accouplement (40) entre la douille d'enroulement de câble (22) et la douille à crans (26) comprend une paire de dentures axiales (251, 253) de la douille d'enroulement de câble (22) et de la douille à crans (26), respectivement, lesquelles s'engagent mutuellement avec le jeu circonférentiel prédéterminé (42).

7. Dispositif (10) selon la revendication 1, dans lequel l'accouplement (40) entre la douille d'enroulement de câble (22) et la douille à crans (26) comprend un trou façonné (454) de la douille à crans (26) qui s'étend axialement et une partie façonnée correspondante (456) de la broche de rotation (24), où le jeu circonférentiel prédéterminé (42) est prévu entre le trou façonné (454) et la partie façonnée (456).

8. Dispositif (10) selon la revendication 7, dans lequel la partie façonnée (456) a une section transversale sensiblement quadrilatérale, avec une paire de côtés opposés (456a) qui sont sensiblement rectilignes et parallèles.

9. Dispositif (10) selon la revendication 8, dans lequel la partie façonnée (456) a l'autre paire de côtés opposés (456b) façonnés en forme d'arc de circonférence dont le centre est sensiblement sur l'axe principal (A) du dispositif (10).

10. Dispositif (10) selon l'une quelconque des revendications précédentes, dans lequel l'angle de course supplémentaire de changement de vitesse prédéterminé (β) est supérieur à zéro et inférieur ou égal à la valeur minimale parmi les angles de crans prédéterminés (α).

11. Dispositif d'actionnement de dispositif de changement de vitesse à frein intégré (100) d'une bicyclette, comprenant un dispositif d'actionnement destiné à un frein de bicyclette et un dispositif d'actionnement (10) destiné à un câble de commande d'un dispositif de changement de vitesse de la bicyclette selon l'une quelconque des revendications précédentes.
